# EUROPEAN PATENT SPECIFICATION

(11) **EP 3 768 640 B1**
(45) Date of publication and mention of the grant of the patent: **24.11.2021**
(21) Application number: 18721455.6
(22) Date of filing: 28.03.2018
(51) Int. Cl.: C01F 7/42, C01F 7/44

(54) **METHOD FOR SYNTHESIS OF GAMMA-ALUMINIUM OXIDE USING PLASMA - MODIFIED ALUMINIUM AND WATER REACTION**
VERFAHREN ZUR HERSTELLUNG VON GAMMA-ALUMINIUMOXID UNTER VERWENDUNG VON PLASMAMODIFIZIERTER ALUMINIUM- UND WASSERREAKTION
PROCÉDÉ DE SYNTHÈSE D'OXYDE D'ALUMINIUM GAMMA À L'AIDE D'UNE RÉACTION ENTRE L'ALUMINIUM MODIFIÉ PAR PLASMA ET L'EAU

(43) Date of publication of application: 27.01.2021
(73) Proprietor: Lietuvos Energetikos Institutas, 44403 Kaunas (LT)
(72) Inventor: MILCIUS, Darius, 51310 Kaunas (LT); LELIS, Martynas, 48458 Kaunas (LT); URBONAVICIUS, Marius, 99290 Pagegiai (LT)
(74) Representative: Pranevicius, Gediminas
(86) International application number: PCT/IB2018/052123
(87) International publication number: WO 2019/186234

(56) References cited:
- WO-A1-2014/092599
- CN-A- 1 266 020
- MARIUS URBONAVICIUS ET AL: "Generation of Hydrogen through the Reaction between Plasma-Modified Aluminum and Water", ENERGY TECHNOLOGY, vol. 5, no. 12, 1 December 2017 (2017-12-01), pages 2300-2308, XP055523154, DE ISSN: 2194-4288, DOI: 10.1002/ente.201700344

## Description

### TECHNICAL FIELD OF THE INVENTION

The present invention relates generally to a method for synthesis of high-specific-surface-area γ-aluminium oxide. More particularly, method involves direct reactions between plasma-modified aluminium powder and pure water at 40 °C followed by heating procedure at elevated temperatures. Mixture of aluminium hydroxide and pseudo-Boehmite are formed as byproduct during the Al-water reaction. Transformation of the Al-water reaction byproduct to pure pseudo-Boehmite - AlO(OH) and gamma aluminium oxide - γ-Al₂O₃ occurs after a heating procedure at 280 °C and 500 °C, respectively.

### BACKGROUND OF THE INVENTION

Aluminium oxide is a polymorphic material that exists in various metastable phases such as y, η, θ, χ, δ, κ and one thermodynamically stable α phase: alumina. All metastable polymorphic phases undergo transformation steps under sufficient thermal treatment. γ-Al₂O₃ is of particular interest because of its favourable properties, such as its crystalline nature; large specific surface area and high chemical and thermal stability that are important for membranes; porous morphology for the better dispersion of catalyst species; low toxicity; and acid/base characteristics, which increase the amount of adsorption sites on the surface and results the increased catalytic activity. γ-Al₂O₃ has many industrial applications, especially in the petroleum industry, automotive emission control, biodiesel production, optoelectronics, water treatment, membranes, and the improvement of wear behaviour. Such a polymorphic structure is considered to be a defective structure with coordinatively unsaturated aluminium cations and oxygen anions acting as acidic and basic sites respectively.

There are various routes for the synthesis of γ-Al₂O₃ including the sol-gel method, hydrothermal/solvothermal processing, the precipitation in ethanol method, spray pyrolysis, laser ablation, a plasma jet mixed with a vapour phase precursor, and the biomimetic method using a broadleaf as a template and a nanocasting route. Aluminium nitrate, aluminium chloride, and alkoxides are common precursors for synthesis in aqueous or semi aqueous solutions. Copolymers or surfactants are employed as structure-directing templates. However, some of these raw materials are expensive, corrosive, and toxic chemical compounds, increasing the cost and instability of the production process. Additionally, the aforementioned synthesis methods are often time- and energy-consuming, as well as complex, involving multiple steps. Moreover, the final γ-Al₂O₃ product contains impurities, such as Fe₂O₃, Na₂O, SiO₂, CaO, Cl, and sulfate compounds.

Document WO2014092599 A1 describes one method for the preparation of high purity γ-alumina.

Pseudo-Boehmite is a cost-effective starting material for the production of high-purity γ-Al₂O₃. Pseudo-Boehmite can be calcined to γ-aluminium oxide at relatively low temperature, approximately 500 °C. Currently, there are several known methods for pseudo-Boehmite production. From a practical point of view, methods which allow the formation of low crystallinity AlO(OH), where crystallites size is 3-10 nm, are specifically important, because increasing crystallinity normally decreases the surface area of γ-Al₂O₃.

At present, pseudo-Boehmite are produced using various technologies:
- Alkoxides-based methods;
- Sulphates-based methods;
- Methods based on materials which contain harmful chemical elements and heavy metals;
- Heavy alkaline earth metals-based methods.

However, these methods have some technological challenges and involve relatively large amount of impurities in the final product:
1. More than 100 ppm of Na₂O in the produced aluminium oxide;
2. More than 100 ppm of SO₄ in the produced aluminium oxide;
3. More than 100 ppm of Fe₂O₃ in the produced aluminium oxide.

The technology described herein allows producing pseudo-Boehmite and γ-Al₂O₃ which purity depends only on the impurity level in the initial materials: aluminium powder and water used in chemical reactions. Concentrations of above mentioned impurities are significantly lower than 100 ppm in the produced aluminium oxide when high purity of aluminium powder, i.e., 99.99 % and water purified by reverse osmosis are used.

### SUMMARY OF THE INVENTION

This invention relates to a novel synthesis method of γ-Al₂O₃ using direct reaction between activated aluminium and water at temperature higher than 40 °C. Aluminium activation is performed under glow discharge plasma treatment in vacuum chamber at 3-10 Pa pressure of hydrogen and residual gases for 10-60 min. Plasma process temperature is 60-90 °C. Activated aluminium is removed from vacuum chamber and immersed into a vessel of pure water which is heated up to temperature exceeding 40 °C and maintained up to 5 hours. During the reaction between activated aluminium and water, pure hydrogen and a mixture of pseudo-Boehmite - AlO(OH) and Bayerite - Al(OH)₃ is produced. The byproduct of the reaction is annealed and fully transformed to pseudo-Boehmite at 280 °C up to 5 hours under the atmospheric conditions. The received pseudo-Boehmite is annealed at 500 °C up to 5 hours under the atmospheric conditions and γ-Al₂O₃ is developed with the BET surface area > 200 m²/g, crystallite size - 3-10 nm, level of remaining impurities: Na₂O <100 ppm, SO₄ < 100 ppm, Fe₂O₃ < 100 ppm.

### BRIEF DESCRIPTION OF THE DRAWINGS

The present invention is described with reference to the accompanying drawings:
FIG. 1 depicts a schematic view illustrating the process for producing gamma aluminium oxide - γ-Al₂O₃ according to the present invention;

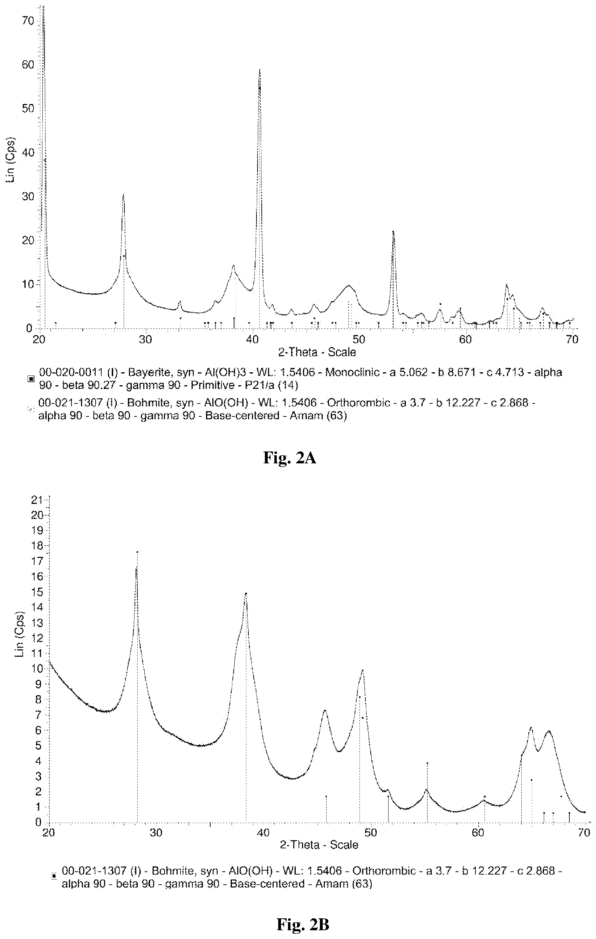

FIG. 2A depicts the powder X-ray diffraction pattern which demonstrates the formation of mixture of pseudo-Boehmite - AlO(OH) and Bayerite - Al(OH)₃ after plasma activated aluminium reaction with water;
FIG. 2B depicts the powder X-ray diffraction pattern which demonstrates the formation of pseudo-Boehmite - AlO(OH) after mixture of pseudo-Boehmite - AlO(OH) and Bayerite - Al(OH)₃ is annealed at 280 °C up to 5 hours under the atmospheric conditions;

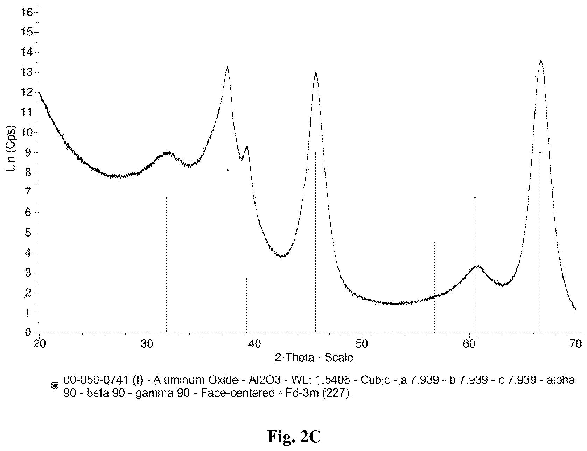

FIG. 2C depicts the powder X-ray diffraction pattern which demonstrates the formation of gamma aluminium oxide - γ-Al₂O₃ after pseudo-Boehmite - AlO(OH) is annealed at 500 °C up to 5 hours under the atmospheric conditions. Gamma aluminium oxide is produced with crystallite size - 3-10 nm and level of remaining impurities - Na₂O <100 ppm, SO₄ < 100 ppm, Fe₂O₃ < 100 ppm.

### DETAILED DESCRIPTION OF THE INVENTION

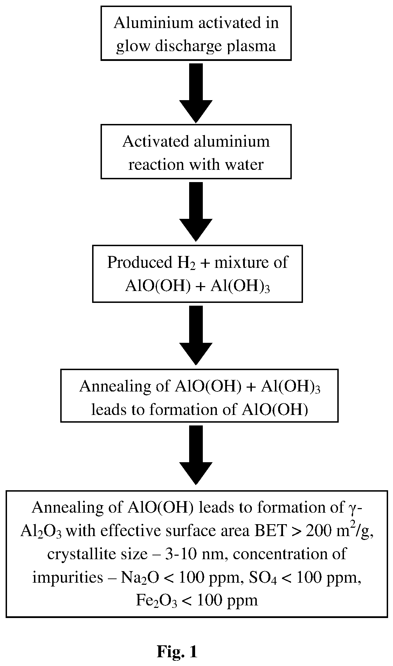

Schematic view of the present invention is presented in Figure 1. Detailed description of the process of the gamma aluminium oxide synthesis:
1. Aluminium powder is immersed in glow discharge plasma in the presence of 3-10 Pa of hydrogen and residual gases for 10-60 min treatment in plasma. Temperature is 60-90 °C during the plasma process.
2. Plasma-activated aluminium powder is immersed in pure water which is heated up to temperature greater than 40 °C. Hydrogen gas and a mixture of pseudo-Boehmite and Bayerite are produced during the reaction between activated aluminium powder and water.
3. The received mixture of pseudo-Boehmite and Bayerite is dried under ambient conditions and annealed at 280 °C up to 5 hours under the atmospheric conditions using an oven, yielding pure pseudo-Boehmite. Further technological steps are suspended if the end user requires only pure pseudo-Boehmite powder.
4. The received pseudo-Boehmite is annealed at 500 °C up to 5 hours under the atmospheric conditions and γ-Al₂O₃ is produced with the BET surface area > 200 m²/g, crystallite size - 3-10 nm, level of remaining impurities: Na₂O < 100 ppm, SO₄ < 100 ppm, Fe₂O₃ < 100 ppm.

## Claims

1. A method for producing gamma aluminium oxide - γ-Al₂O₃ using plasma-activated aluminium and water reactions, said method comprising:
- modifying aluminium powder in glow discharge plasma in the presence of 3-10 Pa of hydrogen and residual gases for 10-60 min at plasma temperature of 60-90 °C;
- immersing activated aluminium in the water received after osmosis purification process which temperature is greater than 40 °C and producing hydrogen gas and mixture of pseudo-Boehmite - AlO(OH) and Bayerite - Al(OH)₃ powder during the Al-water reaction;
- drying and annealing obtained mixture of pseudo-Boehmite - AlO(OH) and Bayerite - Al(OH)₃ at 280 °C up to 5 hours under atmospheric conditions using an oven, yielding pure pseudo-Boehmite - AlO(OH);
- annealing pseudo-Boehmite - AlO(OH) at 500 °C up to 5 hours under atmospheric conditions using an oven, yielding pure γ-Al₂O₃ with the BET surface area >200 m²/g, crystallite size - 3-10 nm, level of remaining impurities - Na₂O <100 ppm, SO₄ < 100 ppm and Fe₂O₃ < 100 ppm.

## Patentansprüche

1. Verfahren für die Herstellung von Gamma-Aluminiumoxid
- γ-Al₂O₃ unter Anwendung von Reaktionen von plasmaaktiviertem Aluminium und Wasser, wobei das Verfahren Folgendes umfasst:
- Modifizieren von Aluminiumpulver in Glimmerentladungsplasma in Gegenwart von 3-10 Pa Wasserstoff und restlichen Gasen 10-60 min lang bei einer Plasmatemperatur von 60-90 °C;
- Tauchen von aktiviertem Aluminium in das Wasser, das nach einem Osmosereinigungsvorgang erhalten worden ist, dessen Temperatur höher als 40 °C ist und Herstellen von Wasserstoffgas und einer Mischung von Pseudo-Böhmit- - AlO(OH) und Bayerit- - Al(OH)₃ Pulver während der Al-Wasserreaktion;
- Trocknen und Ausglühen der erhaltenen Mischung von Pseudo-Böhmit - AlO(OH) und Bayerit - Al(OH)₃ bei 280 °C bis zu 5 Stunden lang unter Luftbedingungen unter Anwendung eines Ofens, wobei reiner Pseudo-Böhmit - AlO(OH) geliefert wird;
- Ausglühen von Pseudo-Böhmit - AlO(OH) bei 500 °C bis zu 5 stundenlang unter Luftbedingungen unter Anwendung eines Ofens, wobei reines γ-Al₂O₃ mit einem BET-Oberflächenbereich von > 200 m²/g, Kristallitgröße - 3-10 nm, Niveau verbleibender Verunreinigungen -Na₂O < 100 ppm, SO₄ < 100 ppm und Fe₂O₃ < 100 ppm geliefert wird.

## Revendications

1. Procédé de production d'oxyde d'aluminium gamma - γ-Al₂O₃ en utilisant de l'aluminium activé au plasma et des réactions à base d'eau, ledit procédé comprenant :
- la modification de poudre d'aluminium en plasma à décharge luminescente en présence de 3 à 10 Pa d'hydrogène et de gaz résiduels pendant 10 à 60 minutes à une température de gaz comprise entre 60 et 90 °C ;
- l'immersion d'aluminium activé dans l'eau reçu après un processus de purification par osmose dont la température est supérieure à 40 °C et la production d'hydrogène gazeux et d'un mélange de pseudo Boehmite - AlO(OH) et de Bayerite - Al(OH)₃ en poudre pendant la réaction d'Al-eau ;
- le séchage et la recuisson du mélange obtenu de pseudo Boehmite - AlO(OH) et de Bayerite - Al(OH)₃ à 280 °C jusqu'à 5 heures dans des conditions atmosphériques en utilisant un four, donnant de la pseudo Boehmite - AlO(OH) pure ;
- la recuisson de la pseudo Boehmite - AlO(OH) à 500 °C jusqu'à 5 heures dans des conditions atmosphériques en utilisant un four, donnant du γ-Al₂O₃ pur avec une zone de surface BET supérieure à 200 m²/g, une taille de cristallite comprise entre 3 et 10 nm, un niveau des impuretés restantes de Na₂O inférieur à 100 ppm, de SO₄ inférieur à 100 ppm et de Fe₂O₃ inférieur à 100 ppm.
